# FASCICULE DE BREVET EUROPEEN

(11) **EP 3 165 139 B1**
(45) Date de publication et mention de la délivrance du brevet: **19.06.2019**
(21) Numéro de dépôt: 16195623.0
(22) Date de dépôt: 25.10.2016
(51) Int. Cl.: A47J 43/07, A47J 43/08

(54) **APPAREIL ÉLECTROMÉNAGER DE PRÉPARATION CULINAIRE COMPRENANT UN DISPOSITIF D'ENTRAÎNEMENT D'UN OUTIL DE TRAVAIL ROTATIF MUNI D'UN SYSTÈME DE FREINAGE**
ELEKTROHAUSHALTSGERÄT ZUR ZUBEREITUNG VON SPEISEN, DAS EINE ANTRIEBSVORRICHTUNG EINES SICH DREHENDEN UND MIT EINEM BREMSSYSTEM AUSGESTATTETEN ARBEITSINSTRUMENTS UMFASST
HOUSEHOLD FOOD-PREPARATION APPLIANCE COMPRISING A DRIVE DEVICE OF A ROTARY WORK TOOL PROVIDED WITH A BRAKING SYSTEM

(30) Priorité: 09.11.2015 FR 1560712
(43) Date de publication de la demande: 10.05.2017
(73) Titulaire: SEB S.A., 69130 Ecully (FR)
(72) Inventeur: GUILMART, Philippe, 53300 SAINT-MARS-SUR-COLMONT (FR); LEMERCIER, Michel, 53250 JAVRON-LES-CHAPELLES (FR); HAMELIN, Franck, 50490 SAINT-SAUVEUR-LENDELIN (FR)
(74) Mandataire: Bourrières, Patrice

(56) Documents cités:
- EP-A1- 0 571 348
- EP-A1- 2 433 533
- CN-Y- 2 738 677
- FR-A1- 2 880 529

## Description

La présente invention se rapporte au domaine technique général des appareils électroménagers de préparation culinaire comportant un boîtier comprenant un moteur relié à un dispositif d'entrainement d'un outil de travail rotatif et se rapporte plus particulièrement à un appareil dans lequel le dispositif d'entrainement est muni d'un système de freinage comportant une roue qui vient rouler sur une bande de roulement ménagée sur un organe rotatif solidaire en rotation d'un arbre du dispositif d'entrainement.

Il est connu, de la demande de brevet FR 2880529, un appareil de préparation culinaire comportant un boîtier comprenant un moteur relié à un dispositif d'entrainement d'un outil rotatif dans lequel le dispositif d'entrainement est muni d'un système de freinage. Dans ce document, le système de freinage est constitué par une roue munie d'un anneau en matériau élastique qui vient rouler, en se comprimant, sur une bande de roulement ménagée sur un organe rotatif solidaire en rotation d'un arbre du dispositif d'entrainement.

Un appareil muni d'un tel système de freinage mécanique présente l'avantage de procurer une grande sécurité d'utilisation en assurant le freinage rapide de l'outil rotatif à l'ouverture du couvercle, empêchant ainsi que l'utilisateur ne puisse mettre les mains sur un outil entrainé en rotation. De plus, un tel système de freinage présente l'avantage de posséder une grande endurance dans le temps, l'anneau étant peu sujet à l'usure étant donné qu'il roule sans glissement sur la bande de roulement de la roue.

Cependant, un tel appareil présente l'inconvénient de posséder un système de freinage qui est actif en permanence, de sorte qu'il engendre des pertes d'énergie importantes lors de l'utilisation de l'appareil.

L'invention qui suit vise à pallier ces inconvénients en proposant un appareil électroménager comportant un boîtier pour l'entrainement d'un outil de travail rotatif muni d'un système de freinage qui n'est actif que lorsque c'est nécessaire.

A cet effet, l'invention se rapporte à un appareil électroménager de préparation culinaire comportant un boîtier comprenant un moteur relié à un dispositif d'entraînement d'un outil de travail rotatif, le dispositif d'entrainement étant muni d'un système de freinage comportant une roue qui vient rouler sur une bande de roulement ménagée sur un organe rotatif solidaire en rotation d'un arbre de sortie du dispositif d'entrainement, caractérisé en ce que la roue est portée par un bras mobile qui peut occuper une position embrayée dans laquelle la roue est au contact de la bande de roulement et une position débrayée dans laquelle la roue est écartée de la bande de roulement.

Un tel appareil présente l'avantage de posséder un système de freinage qui peut être débrayé lorsque les conditions de fonctionnement de l'appareil répondent aux conditions de sécurité requises, évitant toute consommation d'énergie inutile.

Selon une autre caractéristique de l'invention, la roue comporte un élément compressible en matériau élastique qui vient rouler, en se comprimant, sur la bande de roulement.

Une telle caractéristique présente l'avantage de permettre un freinage de l'outil de travail rotatif par la dissipation de l'énergie cinétique de l'outil dans les efforts nécessaires à la compression du matériau élastique. Un tel dispositif de freinage présente également l'avantage d'être endurant et fiable, l'élément compressible étant peu sujet à l'usure par frottement lorsqu'il roule sur la bande de roulement.

Selon une autre caractéristique de l'invention, le bras est ramené dans la position embrayée par un organe de rappel, préférentiellement constitué par un ressort.

Selon une autre caractéristique de l'invention, le bras est monté pivotant autour d'un axe parallèle à l'arbre de sortie du moteur.

Selon une autre caractéristique de l'invention, le bras pivote dans le sens inverse de rotation de la bande de roulement pour passer de la position débrayée à la position embrayée.

Une telle caractéristique présente l'avantage d'engendrer un effet d'entrainement du bras pivotant en direction de la bande de roulement lorsque la roue vient au contact de cette dernière.

Selon une autre caractéristique de l'invention, en position embrayée, le bras forme un angle inférieur à 20°, et préférentiellement inférieur à 10°, avec la droite passant par l'axe de rotation du bras et par l'axe de rotation de la bande de roulement.

Une telle caractéristique présente l'avantage de permettre l'obtention d'un effet d'auto-coincement entre la roue et la bande de roulement contribuant à augmenter fortement la force de compression sur la roue et donc l'efficacité du freinage.

Selon une autre caractéristique de l'invention, le boîtier comporte une pièce de sécurité mobile pouvant occuper une position de fonctionnement dans laquelle la pièce de sécurité agit sur le bras pour l'amener dans la position débrayée et une position d'arrêt dans laquelle le bras peut retourner librement vers la position embrayée sous l'effet de l'organe de rappel.

Une telle caractéristique permet de contrôler l'activation du système de freinage à l'aide un mécanisme simple et économique à mettre en oeuvre.

Selon une autre caractéristique de l'invention, l'appareil comporte un récipient recevant l'outil de travail rotatif et un couvercle venant fermer de manière amovible le récipient, le récipient comportant un élément de détection venant agir sur la pièce de sécurité pour l'amener dans la position de fonctionnement lorsque le couvercle est correctement verrouillé sur le récipient.

Une telle caractéristique permet de lier la désactivation du système de freinage à la présence du couvercle sur le récipient pour une plus grande sécurité d'utilisation.

Selon encore une autre caractéristique de l'invention, l'élément de détection est mobile entre une position de repos dans laquelle l'élément de détection n'interagit pas avec la pièce de sécurité, de sorte que cette dernière peut retourner librement vers la position d'arrêt, et une position activée dans laquelle l'élément de détection agit sur la pièce de sécurité pour l'amener dans la position de fonctionnement.

Selon encore une autre caractéristique de l'invention, l'élément de détection est amené dans la position de repos par un organe de rappel et est amené dans la position activée par un organe d'actionnement porté par le couvercle lorsque ce dernier est verrouillé sur le récipient.

Un tel dispositif présente l'avantage d'être simple et économique à mettre en oeuvre.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention, le couvercle étant représenté désaccouplé du récipient ;
- la figure 2 est une vue en perspective de l'appareil de la figure 1 avec le récipient désaccouplé du boîtier ;
- la figure 3 est une vue en coupe longitudinale du boîtier de l'appareil de la figure 1 ;
- la figure 4 est une vue en perspective éclatée des principaux éléments du système de freinage équipant l'appareil de la figure 1 ;
- les figures 5A et 5B sont des vues en perspective de l'ensemble moteur et du système de freinage équipant l'appareil de la figure 1 lorsque le bras occupe respectivement la position embrayée et débrayée ;
- les figures 6A et 6B sont des vues de dessus de l'ensemble moteur et du système de freinage des figures 5A et 5B lorsque le bras occupe respectivement la position embrayée et débrayée ;
- les figures 7A et 7B sont des vues de côté de l'ensemble moteur et du système de freinage des figures 5A et 5B lorsque le bras occupe respectivement la position embrayée et débrayée.
- la figure 8 est une vue en coupe partielle, de côté, de l'appareil de la figure 1 avec le couvercle en position verrouillée.

Seuls les éléments nécessaires à la compréhension de l'invention ont été représentés. Pour faciliter la lecture des dessins les mêmes éléments portent les mêmes références d'une figure à l'autre.

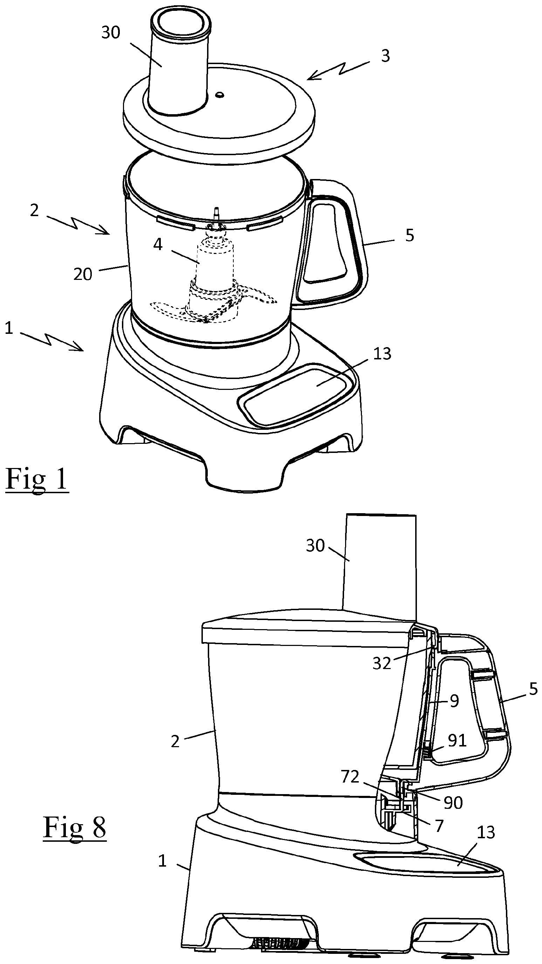

La figure 1 illustre un appareil de préparation culinaire, notamment pour hacher ou trancher, comportant un boîtier 1 supportant un récipient 2 amovible comprenant une enveloppe 20 de section circulaire fermée à son extrémité supérieure par un couvercle 3 amovible muni d'une goulotte 30 pour l'introduction d'aliments, le récipient 2 comportant une poignée de préhension 5 et recevant un outil de travail 4 rotatif, illustré en pointillé sur la figure 1, disposé dans le fond du récipient 2.

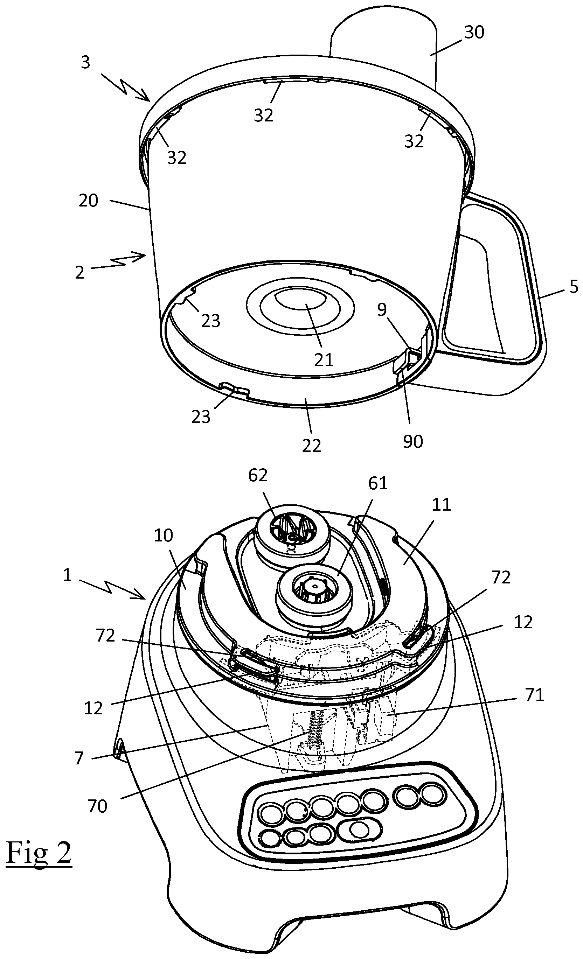

Conformément à la figure 2, le boîtier 1 comporte un socle de réception 10 sur lequel le récipient 2 vient reposer lors de l'utilisation de l'appareil, le socle de réception 10 comportant un dispositif d'entrainement comprenant un entraîneur central 61 et un entraineur excentré 62 entourés d'une empreinte de guidage 11 en forme de U.

Le récipient 2 comporte une cheminée centrale 21 s'étendant dans le fond du récipient pour permettre, de manière connue en soi, l'accouplement de l'outil de travail 4 avec l'entraineur central 61. Le récipient 2 comporte également une jupe 22 qui s'étend verticalement sous le fond du récipient 2 pour s'engager autour de l'empreinte de guidage 11 du socle de réception 10, la jupe 22 comprenant une paroi interne supportant des ergots de verrouillage 23 venant s'engager dans des rainures 12 ménagées en bordure de l'empreinte de guidage pour réaliser une liaison de type baïonnette assurant la fixation du récipient 2 sur le boîtier 1.

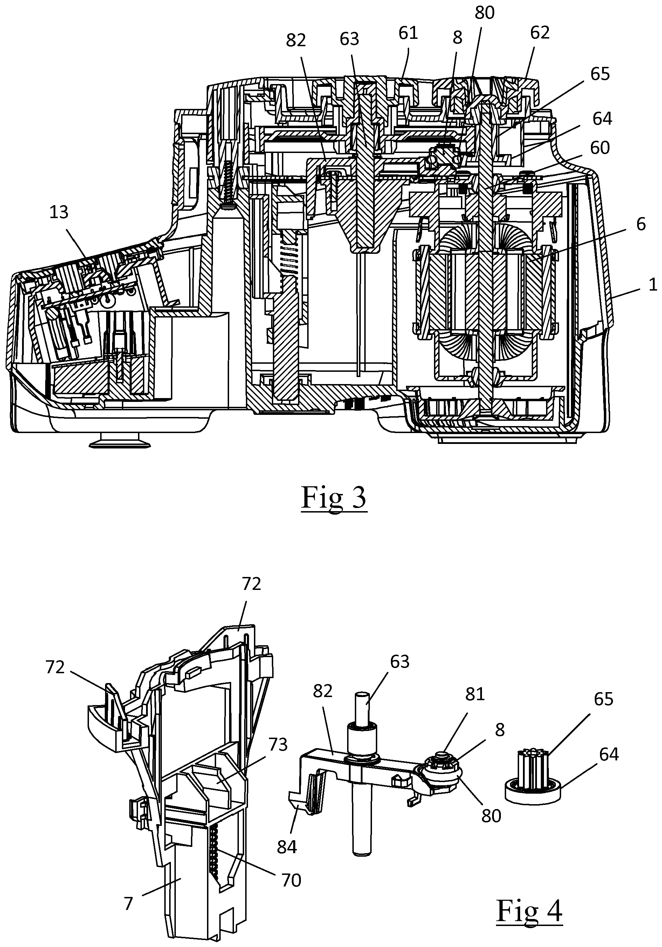

Conformément à la figure 3, le boîtier 1 renferme un moteur 6 électrique de type universel dont le fonctionnement est commandé par un tableau de commande 13 disposé sur la face avant du boîtier 1, la puissance du moteur 6 étant avantageusement comprise entre 500W et 1100W et sa vitesse nominale étant de l'ordre de 16000 tr/min. L'entraineur excentré 62 est préférentiellement monté directement sur un arbre de sortie 60 du moteur 6 électrique et l'entraineur central 61 est monté sur un arbre secondaire 63 entrainé par l'intermédiaire d'un réducteur de vitesse assurant une réduction de la vitesse de l'ordre de dix fois par rapport à la vitesse de rotation du moteur 6.

Comme on peut le voir sur la figure 2, l'appareil comporte un dispositif de sécurité empêchant le fonctionnement du moteur 6 lorsque le récipient n'est pas fermé par son couvercle.

Ce dispositif de sécurité comporte une pièce de sécurité 7, représentée en pointillé sur la figure 2, pouvant se déplacer verticalement dans le boîtier 1, entre une position d'arrêt, vers laquelle elle est ramenée par un ressort 70 de rappel, et dans laquelle le fonctionnement du moteur 6 est rendu impossible par l'ouverture d'un interrupteur 71 disposé sur le circuit d'alimentation du moteur 6, et une position de fonctionnement dans laquelle la pièce de sécurité vient actionner l'interrupteur 71 pour autoriser le fonctionnement du moteur 6.

De manière préférentielle, la pièce de sécurité 7 comporte deux doigts 72 disposés à 90° l'un de l'autre par rapport au centre du socle de réception 10, les deux doigts 72 débouchant au travers de deux fentes ménagées dans l'empreinte de guidage 11.

Le boîtier 1 de l'appareil comporte également un système de freinage qui vient freiner l'entraineur central 61 et l'entraineur excentré 62 lorsque la pièce de sécurité occupe la position d'arrêt, et qui n'est pas actif lorsque la pièce de sécurité occupe la position de fonctionnement.

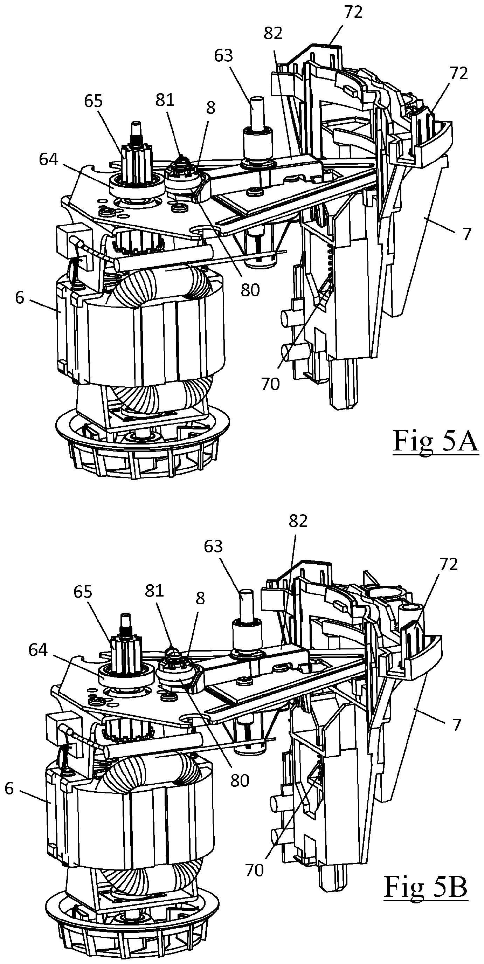

Comme on peut le voir sur les figures 4, 5A et 5B, le système de freinage comporte une roue 8 qui vient rouler sur une bande de roulement 64 ménagée sur un pignon 65 porté par l'arbre de sortie 60 du moteur 6, la roue 8 comportant avantageusement un anneau 80 semblable à un joint torique, qui vient rouler en se comprimant sur la bande de roulement 64. A titre d'exemple, l'anneau 80 présente une section circulaire de l'ordre de 3 mm et est réalisé dans un matériau présentant une dureté de l'ordre de 70 shores tel qu'un caoutchouc, un silicone ou un élastomère thermoplastique vulcanisable.

La roue 8 est monté libre en rotation autour d'un axe 81 porté par un bras 82 monté pivotant sur l'arbre secondaire 63, l'axe 81 étant avantageusement disposé à une extrémité longitudinale du bras 82 et étant orienté parallèlement à l'arbre secondaire 63.

Le bras 82 peut pivoter sur l'arbre secondaire 63 entre une position débrayée, illustrée sur les figures 5B, 6B et 7B, dans laquelle la roue 8 n'est pas au contact avec la bande de roulement 64, et une position embrayée, illustrée sur les figures 5A, 6A et 7A, dans laquelle l'anneau 80 vient en appui contre la bande de roulement 64 du pignon 65 en étant comprimé contre cette dernière.

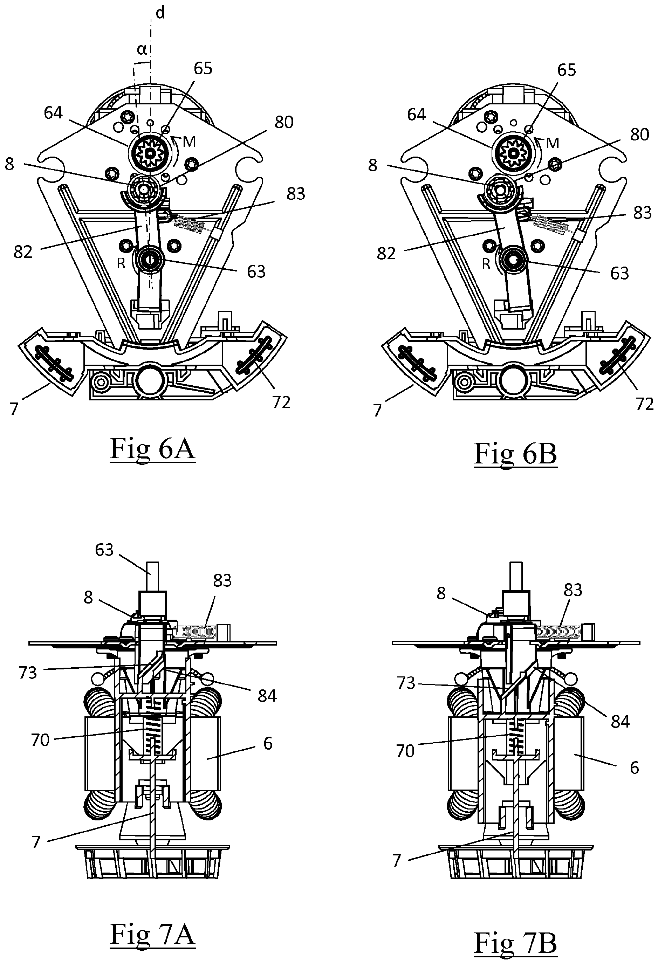

De manière préférentielle, le bras 82 est ramené dans la position embrayée par un ressort de rappel 83 qui fait pivoter le bras 82 dans un sens R, illustré sur la figure 6A, inverse du sens M de rotation de l'arbre de sortie 60 du moteur, de manière à ce que le bras 82 soit entrainé dans le sens R lorsque la roue 8, et en particulier l'anneau 80, parvient au contact de la bande de roulement 64.

Comme on peut le voir sur la figure 6A, le bras 82 présente avantageusement une longueur adaptée pour que le bras 82 forme un angle α de l'ordre de 5° avec la droite d passant par l'axe de rotation du bras 82 et par l'arbre de sortie 60 du moteur lorsque le bras 82 occupe la position embrayée.

Conformément aux figures 4, 7A et 7B, le bras 82 comporte, à l'opposé de l'extrémité longitudinale supportant la roue 8, une extrémité longitudinale présentant un coude supportant une came 84 venant coopérer avec une came 73 portée par la pièce de sécurité 7 pour faire pivoter le bras 82 de la position embrayée vers la position débrayée lorsque la pièce de sécurité 7 passe de la position d'arrêt, illustrée sur la figure 7A, à la position de fonctionnement, illustrée sur la figure 7B.

Le dispositif de sécurité comporte également une tige de détection 9, visible sur la figure 8, qui s'étend le long de la paroi externe du récipient 2 et comporte une extrémité inférieure munie d'un doigt d'activation 90 venant en regard de l'un des doigts 72 de la pièce de sécurité 7 lorsque le récipient 2 est verrouillé sur le socle de réception 10, la présence des deux doigts 72 sur le socle de réception permettant la coopération de la tige de détection 9 avec la pièce de sécurité 7 lorsque le récipient est disposé sur le socle de réception 10 avec la poignée de préhension 5 du récipient respectivement décalée de 45° vers la droite ou de 45° vers la gauche par rapport au tableau de commande 13.

La tige de détection 9 est montée mobile en translation dans la poignée de préhension 5 à l'encontre d'un ressort de rappel 91 et, d'une manière connue en soi et décrite plus en détails dans la demande de brevet FR 3019024 déposée par la demanderesse, vient exercer une pression sur le doigt 72 pour amener la pièce de sécurité 7 dans la position de fonctionnement lorsque le récipient 2 est verrouillé sur le socle de réception 10 et que le couvercle 3 est correctement verrouillé sur le récipient 2.

Le fonctionnement du dispositif de sécurité et le fonctionnement du système de freinage qui lui est associé vont maintenant être décrits.

Lorsque l'utilisateur souhaite utiliser l'appareil, il place le couvercle 3 sur le récipient 2, puis le fait tourner dans le sens du verrouillage de manière à ce qu'un organe d'actionnement 32 du couvercle 3 vienne repousser la tige de détection 9 vers la position de fonctionnement, illustrée sur la figure 8, dans laquelle la tige de détection 9 repousse la pièce de sécurité 7 dans la position de fonctionnement.

Un tel déplacement de la pièce de sécurité 7 vers la position de fonctionnement provoque alors l'actionnement de l'interrupteur 71 du circuit d'alimentation du moteur 6 et le déplacement du bras 82 vers la position débrayée.

L'utilisateur peut alors faire fonctionner l'appareil en sélectionnant la commande désirée sur le panneau de commande 13, le fonctionnement du moteur 6 étant rendu possible sans perte d'énergie au travers du système de freinage étant donné que la roue 8 est alors écartée de la bande de roulement 64.

Si l'utilisateur ouvre le couvercle 3 sans avoir au préalable arrêté le moteur 6, ceci provoque la remontée immédiate de la tige de détection 9 sous l'effet du ressort de rappel 91 et donc le retour en position d'arrêt de la pièce de sécurité 7, ce qui provoque l'ouverture de l'interrupteur 71 du circuit d'alimentation du moteur 6 et le basculement du bras 82 dans la position embrayée de sorte que la roue 8, et notamment l'anneau 80, vient au contact de la bande de roulement 64 pour freiner brutalement l'arbre de sortie 60 du moteur.

En particulier, lorsque la roue 8 parvient au contact de la bande de roulement 64, le frottement de la roue 8 sur la bande de roulement 64 génère un couple sur le bras 82 dans le sens R qui tend à comprimer l'anneau 80 contre la bande de roulement 64 au bénéfice de l'efficacité du freinage.

De plus, le faible angle a, résultant entre le bras 82 et la droite d lorsque le bras occupe la position embrayée, permet d'obtenir un effet d'auto-coincement important entre la roue 8 et la bande de roulement 64 qui contribue à l'efficacité du freinage, tout en autorisant un retour automatique du bras 82 vers la position débrayée sous l'effet du ressort de rappel 83 lorsque moteur 6 est arrêté.

Un tel appareil présente donc l'avantage de comporter un système de freinage mécanique qui assure un freinage rapide de l'outil de travail lors de l'ouverture du couvercle. En particulier, un tel système de freinage, faisant appel à la compression d'un matériau pour dissiper l'énergie, présente l'avantage d'être fiable et endurant dans le temps.

Un tel appareil présente également l'avantage de comporter un dispositif de freinage mécanique qui est inactif lorsque la pièce de sécurité est en position de fonctionnement, de sorte qu'il n'y a pas de pertes d'énergie au travers du système de freinage lorsque l'appareil est utilisé dans les conditions normales de fonctionnement.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'anneau élastique pourra être remplacé par un élément compressible présentant une forme différente ou pourra également être remplacé par un bandage surmoulé.

Ainsi, dans une variante de réalisation, l'anneau élastique pourra être solidaire de l'arbre de sortie du moteur et rouler sur la roue portée par le bras.

Ainsi, l'invention pourra être appliquée à tous types de préparateurs culinaires comprenant un moteur entraînant un outil de travail rotatif tels que les mini-hachoirs, les mixeurs, les batteurs...

## Revendications

1. Appareil électroménager de préparation culinaire comportant un boîtier (1) comprenant un moteur (6) relié à un dispositif d'entraînement d'un outil de travail rotatif (4), ledit dispositif d'entrainement étant muni d'un système de freinage comportant une roue (8) qui vient rouler sur une bande de roulement (64) ménagée sur un organe rotatif (65) solidaire en rotation d'un arbre de sortie (60) du dispositif d'entrainement, **caractérisé en ce que** ladite roue (8) est portée par un bras (82) mobile qui peut occuper une position embrayée dans laquelle la roue (8) est au contact de la bande de roulement (64) et une position débrayée dans laquelle la roue (8) est écartée de la bande de roulement (64).

2. Appareil électroménager de préparation culinaire selon la revendication 1, **caractérisé en ce que** la roue (8) comporte un élément compressible (80) en matériau élastique qui vient rouler, en se comprimant, sur la bande de roulement (64).

3. Appareil électroménager de préparation culinaire selon l'une quelconque des revendications 1 à 2, **caractérisé en ce que** le bras (82) est ramené dans la position embrayée par un organe de rappel (83), préférentiellement constitué par un ressort.

4. Appareil électroménager de préparation culinaire selon la revendication 3, **caractérisé en ce que** le boîtier comporte une pièce de sécurité (7) mobile pouvant occuper une position de fonctionnement dans laquelle ladite pièce de sécurité (7) agit sur le bras (82) pour l'amener dans la position débrayée et une position d'arrêt dans laquelle le bras (82) peut retourner librement vers la position embrayée sous l'effet de l'organe de rappel (83).

5. Appareil électroménager de préparation culinaire selon la revendication 4, **caractérisé en ce que** l'appareil comporte un récipient (2) recevant l'outil de travail rotatif (4) et un couvercle (3) venant fermer de manière amovible le récipient (2), le récipient (2) comportant un élément de détection (9) venant agir sur la pièce de sécurité (7) pour l'amener dans la position de fonctionnement lorsque le couvercle (3) est correctement verrouillé sur le récipient.

6. Appareil électroménager de préparation culinaire selon la revendication 5, **caractérisé en ce que** ledit élément de détection (9) est mobile entre une position de repos dans laquelle l'élément de détection (9) n'interagit pas avec la pièce de sécurité (7), de sorte que cette dernière peut retourner librement vers la position d'arrêt, et une position activée dans laquelle l'élément de détection (9) agit sur la pièce de sécurité (7) pour l'amener dans la position de fonctionnement.

7. Appareil électroménager de préparation culinaire selon la revendication 6, **caractérisé en ce que** l'élément de détection (9) est amené dans la position de repos par un organe de rappel (91) et est amené dans la position activée par un organe d'actionnement (32) porté par le couvercle (3) lorsque ce dernier est verrouillé sur le récipient (2).

8. Appareil électroménager de préparation culinaire selon l'une quelconque des revendications 1 à 7, **caractérisé en ce que** le bras (82) est monté pivotant autour d'un axe (63) parallèle à l'arbre de sortie (60) du moteur.

9. Appareil électroménager de préparation culinaire selon la revendication 8, **caractérisé en ce que** le bras (82) pivote dans le sens inverse de rotation de la bande de roulement (64) pour passer de la position débrayée à la position embrayée.

10. Appareil électroménager de préparation culinaire selon la revendication 9, **caractérisé en ce que**, en position embrayée, le bras (82) forme un angle inférieur à 20°, et préférentiellement inférieur à 10°, avec la droite (d) passant par l'axe (63) de rotation du bras et par l'axe de rotation de la bande de roulement (64).

## Patentansprüche

1. Elektrisches Haushaltsgerät zur kulinarischen Zubereitung, aufweisend ein Gehäuse (1), das einen Motor (6) umfasst, der mit einer Antriebsvorrichtung für ein rotierendes Arbeitswerkzeug (4) verbunden ist, wobei die Antriebsvorrichtung mit einem Bremssystem versehen ist, das ein Rad (8) aufweist, das auf einer Lauffläche (64) rollt, die an einem Drehorgan (65) ausgebildet ist, das drehfest mit einer Ausgangswelle (60) der Antriebsvorrichtung verbunden ist, **dadurch gekennzeichnet, dass** das Rad (8) von einem beweglichen Arm (82) getragen wird, der eine eingekuppelte Position, in der das Rad (8) die Lauffläche (64) berührt, und eine ausgekuppelte Position einnehmen kann, in der das Rad (8) von der Lauffläche (64) beabstandet ist.

2. Elektrisches Haushaltsgerät zur kulinarischen Zubereitung nach Anspruch 1, **dadurch gekennzeichnet, dass** das Rad (8) ein komprimierbares Element (80) aus elastischem Material aufweist, das auf der Lauffläche (64) rollt, wobei es zusammengedrückt wird.

3. Elektrisches Haushaltsgerät zur kulinarischen Zubereitung nach einem der Ansprüche 1 bis 2, **dadurch gekennzeichnet, dass** der Arm (82) durch ein Rückstellorgan (83), das vorzugsweise aus einer Feder besteht, in die eingekuppelte Position zurückgebracht wird.

4. Elektrisches Haushaltsgerät zur kulinarischen Zubereitung nach Anspruch 3, **dadurch gekennzeichnet, dass** das Gehäuse einen beweglichen Sicherheitsteil (7) aufweist, der eine Betriebsposition einnehmen kann, in der der Sicherheitsteil (7) auf den Arm (82) einwirkt, um ihn in die ausgekuppelte Position und eine Stoppposition zu bringen, in der der Arm (82) unter der Wirkung des Rückstellorgans (83) frei in die eingekuppelte Position zurückkehren kann.

5. Elektrisches Haushaltsgerät zur kulinarischen Zubereitung nach Anspruch 4, **dadurch gekennzeichnet, dass** das Gerät einen Behälter (2), der das rotierende Arbeitsgerät (4) aufnimmt, und einen Deckel (3) aufweist, der den Behälter (2) lösbar verschließt, wobei der Behälter (2) ein Erfassungselement (9) aufweist, das auf den Sicherheitsteil (7) wirkt, um ihn in die Betriebsposition zu bringen, wenn der Deckel (3) korrekt an dem Behälter verriegelt ist.

6. Elektrisches Haushaltsgerät zur kulinarischen Zubereitung nach Anspruch 5, **dadurch gekennzeichnet, dass** das Erfassungselement (9) zwischen einer Ruheposition, in der das Erfassungselement (9) nicht mit dem Sicherheitsteil (7) zusammenwirkt, so dass dieser letztere frei in die Stoppposition zurückkehren kann, und einer aktivierten Position bewegbar ist, in der das Erfassungselement (9) auf der Sicherheitsteil (7) einwirkt, um es in die Betriebsposition zu bringen.

7. Elektrisches Haushaltsgerät zur kulinarischen Zubereitung nach Anspruch 6, **dadurch gekennzeichnet, dass** das Erfassungselement (9) durch ein Rückstellorgan (91) in die Ruheposition gebracht wird und durch ein Betätigungsorgan, das von dem Deckel (3) getragen wird, in die aktivierte Position (32) gebracht wird, wenn dieser letztere an dem Behälter (2) verriegelt ist.

8. Elektrisches Haushaltsgerät zur kulinarischen Zubereitung nach einem der Ansprüche 1 bis 7, **dadurch gekennzeichnet, dass** der Arm (82) um eine Achse (63) parallel zu der Ausgangswelle (60) des Motors schwenkbar gelagert ist.

9. Elektrisches Haushaltsgerät zur kulinarischen Zubereitung nach Anspruch 8, **dadurch gekennzeichnet, dass** der Arm (82) in die entgegengesetzte Drehrichtung der Lauffläche (64) schwenkt, um sich von der ausgekuppelten Position in die eingekuppelte Position zu bewegen.

10. Elektrisches Haushaltsgerät zur kulinarischen Zubereitung nach Anspruch 9, **dadurch gekennzeichnet, dass** der Arm (82) in der eingekuppelten Position einen Winkel von weniger als 20° und vorzugsweise weniger als 10° mit der Geraden (d) bildet, die durch die Drehachse (63) des Arms und die Drehachse der Lauffläche (64) verläuft.

## Claims

1. Household electrical appliance for food preparation comprising a housing (1) comprising a motor (6) connected to a drive device for a rotary tool (4), wherein this drive device has a braking system comprising a wheel (8) which rolls on a tread (64) arranged on a rotary member (65) rotationally secured to an output shaft (60) of the drive device, **characterised in that** this wheel (8) is carried by a movable arm (82) which can occupy an engaged position in which the wheel (8) is in contact with the tread (64) and a disengaged position in which the wheel (8) is removed from the tread (64).

2. Household electrical appliance for food preparation according to claim 1, **characterised in that** the wheel (8) has a compressible element (80) made of elastic material which rolls, compressing, on the tread (64).

3. Household electrical appliance for food preparation according to any one of claims 1 to 2, **characterised in that** the arm (82) is brought back into the engaged position by a return member (83), preferably constituted by a spring.

4. Household electrical appliance for food preparation according to claim 3, **characterised in that** the housing comprises a movable safety part (7) capable of occupying an operating position in which this safety part (7) acts on the arm (82) to bring it into the disengaged position and a stopping position in which the arm (82) can freely return to the engaged position under the effect of the return member (83).

5. Household electrical appliance for food preparation according to claim 4, **characterised in that** the appliance comprises a container (2) receiving the rotary tool (4) and a cover (3) detachably closing the container (2), wherein the container (2) comprises a detection element (9) acting on the safety part (7) to bring it into the operating position when the cover (3) is correctly locked on the container.

6. Household electrical appliance for food preparation according to claim 5, **characterised in that** this sensing element (9) is movable between a rest position in which the sensing element (9) does not interact with the safety part (7), so that the latter can freely return to the rest position, and an activated position in which the sensing element (9) acts on the safety part (7) to bring it into the operating position.

7. Household electrical appliance for food preparation according to claim 6, **characterised in that** the sensing element (9) is brought into the rest position by a return member (91) and is brought into the activated position by an actuator (32) carried by the cover (3) when the latter is locked on the container (2).

8. Household electrical appliance for food preparation according to any one of claims 1 to 7, **characterised in that** the arm (82) is mounted so as to be pivotable about an axis (63) parallel to the output shaft (60) of the motor.

9. Household electrical appliance for food preparation according to claim 8, **characterised in that** the arm (82) pivots in the opposite direction of rotation of the tread (64) from the disengaged position to the engaged position.

10. Household electrical appliance for food preparation according to claim 9, **characterised in that**, in the engaged position, the arm (82) forms an angle of less than 20°, and preferably less than 10°, with the straight line (d) passing through the axis (63) of rotation of the arm and through the axis of rotation of the tread (64).
